Europäisches Patentamt

**European Patent Office**

**Office européen des brevets**

(19)

(11) Veröffentlichungsnummer: **0 072 018**
A1

(12) ## EUROPÄISCHE PATENTANMELDUNG

(21) Anmeldenummer: **82107190.9**

(22) Anmeldetag: **09.08.82**

(51) Int. Cl.³: **F 27 D 15/02,** C 04 B 7/50

(30) Priorität: **08.08.81 DE 3131514**

(43) Veröffentlichungstag der Anmeldung: **16.02.83**
**Patentblatt 83/7**

(84) Benannte Vertragsstaaten: **AT CH FR GB IT LI**

(71) Anmelder: **von Wedel, Karl, Amselstrasse 5,**
**D-3057 Neustadt 1 (DE)**

(72) Erfinder: **von Wedel, Karl, Amselstrasse 5,**
**D-3057 Neustadt 1 (DE)**

(74) Vertreter: **Patentanwälte Wenzel & Kalkoff, Grubes**
**Allee 26 Postfach 730466, D-2000 Hamburg 73 (DE)**

(54) **Verfahren zum Kühlen von Kühlgutbetten auf Rostkühlern und Stauvorrichtung zur Durchführung des Verfahrens.**

(57) Bei einem Verfahren zum Kühlen von Kühlgutbetten aus ungleichförmigen Korngemischen gebrannten Schüttguts wie Zementklinker auf Rostkühlern wird die Kühlmediumsgeschwindigkeit so hoch gewählt, dass sich oberhalb einer sich absetzenden Festbettschicht (1) groben Korns ein Wirbelbett (2) aus Feingut bildet. Um unkontrollierte Bewegungen des Feinanteils so zu kontrollieren, dass eine spezifisch günstige Verweilzeit von Grob- und Feingut erreichbar ist, wird das Kühlgut an der kalten Ablaufseite (5) des Rostkühlers angestaut, und Festbett (1) und Wirbelbett (2) werden unabhängig voneinander, letzteres vorzugsweise unter Einfluss von Gefälle und Schwerkraft, gefördert. Zur Annäherung an das Gegenstromprinzip kann die mittlere Betthöhe wesentlich erhöht werden. Zum Anstauen ist quer zum Förderfluss eine insbesonders auf das Wirbelbett (2) einwirkende verstellbare Stauwand (8) mit Grenzdruckschaltung angeordnet. Diese lässt zum Rost (3) eine Öffnung für den Kühlgutdurchtritt frei. Durch den Rost (3) fallendes Material wird auf das Kühlgut mit Hilfe des Kühlmediums zurückgeführt.

Karl von Wedel, Amselstraße 5, 3057 Neustadt 1 0072018

Verfahren zum Kühlen von Kühlgutbetten auf Rostkühlern und Stauvorrichtung zur Durchführung des Verfahrens

Die Erfindung bezieht sich auf ein Verfahren zum Kühlen von Kühlgutbetten aus ungleichförmigen Korngemischen von gebranntem Schüttgut wie Zementklinker auf Rostkühlern sowie auf eine Stauvorrichtung zur Durchführung dieses Verfahrens.

Bei der Zementerzeugung, aber auch bei anderen in Drehöfen erbrannten Schüttgütern wie Dolomit, Magnesit, Eisenerz, Kalk oder Phosphat, wird nach Erreichen einer prozeßbedingten Temperatur im Drehofen das Schüttgut in der Regel einem Kühler zugeführt, in dem direkt an dem Kühlgut die Verbrennungsluft vorgewärmt wird. Die erreichbaren Rekuperationsgrade der Kühlgutwärme in der Verbrennungsluft hängen dabei von den Massenstromverhältnissen, den spezifischen Wärmen und von den Wärmetauschbedingungen ab.

In modernen Zementerzeugungsanlagen stehen infolge von Wärmeeinsparungen nur noch 0,8 bis 0,9 $nm^3$ der Verbrennungsluft je Kilogramm Zementklinker zur Kühlung zur Verfügung. Der Rekuperationsgrad kann dennoch theoretisch 100 % betragen. Praktisch werden jedoch von den meisten Kühlerbauarten nicht mehr als 70 % Rekuperation erreicht. Die restliche Wärme ist bei Rostkühlern an große Mengen staubhaltiger Abluft gebunden. Sie kann gelegentlich außerhalb der unmittelbaren Zementerzeugung verwertet werden. Eine Steigerung des Rekuperationsgrades um 10 % würde die Einsparung von 5 % der Gesamtwärmeenergie der Zementanlage bedeuten.

Die Begrenzung der Rekuperation liegt wesentlich an der ungleichförmigen Kornzusammensetzung des Zementklinkers und an den unterschiedlichen Wärmetauschbedingungen der Kühlerbauarten für den Grob- bzw. den Feinanteil im Klinker.

- 2 -

Die Bauarten Drehrohrkühler und Satellitenrohrkühler arbeiten nach dem Gegenstromprinzip. Sie sind gut für den Feinanteil geeignet, der gleichmäßig z.B. in Schleiern dem Luftstrom ausgesetzt und gekühlt wird. Für die ausreichende Kühlung des Grobgutes, das in Drehrohren zudem schneller als der Feinanteil transportiert wird, sind die für den Feinanteil zulässigen Luftgeschwindigkeiten zu gering. Grobe Brocken in einzelnen Satellitenrohren stören darüber hinaus die gleichmäßige Luftverteilung auf diese Rohre.

Im Schachtofen (s. z.B. DE-PS 15 58 609), der ebenfalls im Gegenstrom arbeitet, wird nach den üblichen Auslegungen der Strömungsgeschwindigkeit des Kühlmediums und der Verweilzeit das Grobgut gut gekühlt, während der Feinanteil sich in einem darüber befindlichen Wirbelbett oder unverwirbelt in Ecken anreichert und stoßweise infolge zusammenbrechender Strömung des Kühlmediums ausgetragen und infolgedessen schlecht gekühlt wird.

Bei Rostkühlern wird im Quer- oder Kreuzstrom gearbeitet und auf den Gegenstrom zugunsten einer verbesserten Luftverteilung auf Grob- und Feingut verzichtet. Bekannt ist dabei, den Kreuzstrom des Kühlmediums ein- oder mehrfach im Gegensinn durch das Bett zu führen. Die verbesserte Luftverteilung wird durch die große Rostfläche in Verbindung mit geringen Betthöhen von 0.5 m und zwangsweiser Durchströmung der einzelnen Rostabschnitte mittels abgeteilter Luftkammern unter dem Rost erzielt. Aufgrund der Beobachtung der Luftverteilung können einzelne Rostplatten luftundurchlässig gemacht oder vom Schubantrieb getrennt werden, um die Betthöhe und die Luftverteilung zu vergleichmäßigen. Auf diese Art kühlt der Querstrom-Rostkühler Grob- und Feinanteil etwa gleich gut und erreicht dadurch in der Praxis die gleichen Rekuperationsgrade wie die Gegenstromkühler in den Bauarten Rohr-, Satellitenrohr- und Schachtkühler.

Versuche, die Betthöhe bei gleicher Luftgeschwindigkeit, aber entsprechend stärkerer Pressung zu erhöhen (Erhöhung der Verweilzeit), zeigen schlechtere Rekuperation, was mit schlechterer Luftverteilung und örtlicher Feinanteilanreicherung infolge verminderter Bettbewegung durch den Rost zu erklären ist.

0072018

Andere Versuche, die Luftgeschwindigkeit zu erhöhen, ergeben unkontrollierbare Bettbewegungen insbesondere des Feinanteils (red river). Daher werden bei ungleichmäßiger Körnung Betthöhen von nicht mehr als O.5 m mit Luftgeschwindigkeiten unterhalb des Wirbelpunktes für den Feinanteil gefahren.

Infolge dieser unterschiedlichen Eignung der Kühler für Grob- und Feingut bzw. deren unterschiedliche Verhalten im Kühlluftstrom sind Lösungen bekannt geworden, die eine Trennung von Grob- und Feinanteil und ihre getrennte Kühlung vorsehen.

Es ist bekannt (DE-AS 23 43 229), den Feinanteil in der heißen Aufgabezone eines Rostkühlers durch starke Luftbeaufschlagung dieser Zone nach oben zu separieren und - ggf. unterstützt durch quer geneigte Rostflächen - zur Seite auszutragen. Dadurch wird es möglich, auf dem Rost nur den Grobanteil und in zusätzlich quer dazu angeordneten Fluidierkühlern den Feinanteil zu kühlen.

Bei einem anderen bekannten Verfahren (DE-AS 23 07 165) erfolgt die Trennung von Grob- und Feinanteil durch eine zusätzliche obere Kühlebene, ausgebildet als Rost oder Sieb, auf der das Grobgut verbleibt, während der Feinanteil im gleichen Luftstrom in einem darunter befindlichen Wirbelbett gekühlt wird.

Beide Vorschläge wurden bisher nicht verwirklicht. Dies liegt an zusätzlichem, erheblich über den für den Schubrost hinausgehenden Bauaufwand, verbunden mit einer dem Fachmann geläufigen Unsicherheit über die zu erwartenden Mengenanteile von Grob- und Feingut und, daraus folgend, einer Unsicherheit der Auslegung der getrennten Kühlsysteme.

Der Erfindung liegt daher die Aufgabe zugrunde, den Rekuperationsgrad von Rostkühlern unter Erhöhung der Luftgeschwindigkeit zu verbessern und die dabei nach den bisherigen Erkenntnissen unkontrollierten Bewegungen des Feinanteils so zu kontrollieren, daß eine spezifisch günstige Verweilzeit von Grob- und Feingut in derselben Kühlvorrichtung erreicht wird.

Erfindungsgemäß ist zur Lösung dieser Aufgabe bei einem Verfahren der eingangs beschriebenen Art vorgeschlagen, daß eine obere Schicht des Kühlguts an der kalten Ablaufseite des Rostkühlers angestaut wird. In besonders vorteilhafter Weise läßt sich das erfindungsgemäße Verfahren mit einer Stauvorrichtung durchführen, bei der oberhalb des kalten Ablaufes des Kühlgutbettes zwischen den Seitenwänden des Kühlers eine Stauwand angeordnet ist, die zum Rost eine Öffnung für den Durchtritt des Kühlgutes frei läßt.

Die mit der Erfindung erzielbaren Vorteile bestehen insbesondere in folgendem:

1. Bei großen Betthöhen ergibt sich ein wesentlicher Temperaturanstieg von den unteren Bettschichten zu der oberen hin. Durch Stauen der oberen Schicht wird die Entnahme von Material einheitlicher Temperaturen möglich.

2. Feinanteil und Grobanteil des Kühlguttes bleiben in einem von unten nach oben von Kühlmedium durchströmten Bett und können laufend wechselnde Mengenanteile haben.

3. Feinanteil und Grobanteil werden weitgehend unabhängig voneinander gefördert und am Ende des Kühlers entnommen, wo jeweils ihre niedrigste Temperatur erwartet wird. Dadurch werden für Grob- und für Feinanteil spezifisch günstige Verweilzeiten eingestellt, während zur Vermeidung von unnötigem Druckabfall des Kühlmediums ausreichend gekühltes Material umgehend dem Kühler entnommen wird.

4. Die Kühlung des Grobgutes erfolgt mittels kälterer Luft bei höherem Temperaturgefälle als die Kühlung des darüber befindlichen Feingutes. Dies entspricht dem größeren Kühlbedarf des Grobgutes, wirkt zerkleinernd infolge der Kühlspannungen und erlaubt häufige Schubbewegungen des Rostes.

5. Infolge der höheren Luftbeaufschlagung und der verbesserten Luftverteilung kann vorgewärmte Luft bereits in der ersten Kammer unter der heißen Zulaufseite des Rostbettes eingesetzt werden, ohne daß Temperaturschäden an den Rostplatten eintreten.

6. Die stärkere Luftbeaufschlagung und intensivere Kühlung ist mit einer Einsparung an Rostfläche und Abhitzeanlagen verbunden.

7. Die höhere Luftbeaufschlagung läßt weniger Rostdurchfall erwarten. Seine Ausschleusung aus den druckbeaufschlagten Kammern und seine mechanische Förderung auf Heißgutförderern können daher vorteilhaft durch eine pneumatische Rückführung auf das Rostbett aus der vollständig geschlossenen Kammer erfolgen.

In bevorzugter Durchführung der Erfindung kann die angestaute obere Kühlgutschicht durch entsprechend hoch gewählte Kühlmediumsgeschwindigkeit oberhalb einer sich absetzenden Festbettschicht groben Korns zumindest teilweise ein Wirbelbett aus Feingut bilden.

Um die durch die erhöhte Luftgeschwindigkeit erzielte bessere Verteilung der Luft in besonders vorteilhafter Weise zu nutzen, ist in besonderer Weiterbildung des erfindungsgemäßen Verfahrens vorgesehen, daß die mittlere Betthöhe von Rostkühlern wesentlich erhöht wird. Wie bereits beschrieben, beträgt bei herkömmlichen Kühlgutbetten die maximale Betthöhe im Mittel nicht mehr als 0.5 m. Mit der erfindungsgemäß erzielbaren wesentlichen Erhöhung, die beispielsweise eine Verdoppelung sein kann, läßt sich die Luft auf eine erheblich höhere Temperatur bringen. Damit läßt sich der Rostkühler in seiner Wirkungsweise dem Schachtofen und dem in letzteren verwirklichten Gegenstromprinzip näher bringen.

Um eine noch gleichmäßigere Verteilung der Luft im Kühlgut zu erzielen, kann vorteilhaft das Kühlgutbett, d.h.
das Festbett und das Wirbelbett zusammengenommen, von der
heißen Zulaufseite zur kalten Ablaufseite hin in seiner
Höhe zunehmen, wobei das Wirbelbett in gleicher Richtung
in seiner Höhe abnimmt. Heißes Gut setzt der Durchströmung mit einem Kühlmedium einen höheren Widerstand entgegen als kaltes Gut. Indem die Betthöhe mit der Abkühlung in Längsrichtung des Rostes zunimmt, kommt dieser
Effekt der gleichmäßigen Luftverteilung zugute. Ein Wirbelbett weist vertikal eine homogene Stoff- und Temperaturverteilung auf. Dies ist dem Gegenstromprinzip abträglich.
Deswegen kann die Luftgeschwindigkeit längs der Kühlrinne
so zurückgenommen werden, daß die Höhe des Wirbelbettes
zur kalten Auslaufseite hin abnimmt. In diesem Zusammenhang ist besonders bemerkenswert, daß üblicherweise die
Gesamthöhe der Kühlgutbetten auf Rostkühlern zur Ablaufseite hin abnimmt.

In besonders einfacher Weise kann man die getrennte Förderung von Festbett und Wirbelbett dadurch erzielen, daß
das Wirbelbett unter dem Einfluß eines Gefälles und der
Schwerkraft gefördert wird. Dieses Gefälle läßt sich durch
die Entnahmemengen laufend verändern. Konstruktiv ist diese Möglichkeit besonders günstig, obwohl es selbstverständlich auch denkbar ist, eine mechanische Förderung des
Wirbelbettes, z.B. mittels eines Kratzerbandes, von oben
her durchzuführen.

Nach einer Weiterbildung der Erfindung können von dem Festbett und von dem Wirbelbett getrennte Temperaturen gemessen und nach diesen Werten die Fördergeschwindigkeiten des
Festbettes und des Wirbelbettes eingestellt oder geregelt
werden. Dabei wird vorzugsweise eine gleich gute Kühlung
beider Materialströme angestrebt.

0072018

Besonders vorteilhaft ist es, durch den Rost fallendes
Material zusammen mit dem Kühlmedium dem Kühlgut wieder
zuzführen.

Zur Durchführung des erfindungsgemäßen Verfahrens ist
eine Stauvorrichtung vorgeschlagen, bei der in bevorzugter
Weise oberhalb des kalten Ablaufes des Kühlgutbettes
zwischen den Seitenwänden des Kühlers eine Stauwand angeordnet ist, die zum Rost eine Öffnung für den Durchtritt
des Kühlgutes frei läßt. Auf diese Weise läßt sich besonders vorteilhaft der Feingutanteil stauen, während der
Grobgutanteil im wesentlichen unbeeinflußt gelassen wird.

Vorteilhaft ist der Auslaufquerschnitt für das Kühlgut zwischen dem Rost und der Stauwand verstellbar, was beispielsweise dadurch erfolgen kann, daß die Stauwand senkrecht und
in einer seitlichen Schiene geführt ist und auf und ab bewegt wird. Dadurch läßt sich der Förderstrom des Feinanteils
in recht einfacher Weise regeln. Zu diesem Zweck der Verstellung des Auslaufquerschnittes kann eine Hydraulik, umfassend
einen oder mehrere hydraulische Stellzylinder, vorgesehen
sein. Da im Drehofenbetrieb gelegentlich sehr große Ansatzbrocken zu erwarten sind, die für den gerade eingestellten
Auslaufquerschnitt zu groß sind, weist dabei die Hydraulik
eine oberhalb des normalen Anstelldruckes ansprechende
Granzdruckschaltung für ein kurzzeitiges Anheben der Stauwand und danach selbsttätiges Absenken derselben auf, so daß solch
großes Material unbehindert den Auslauf passieren kann. Durch
diese Anordnung kann man sogar bei entsprechend schwerer Ausführung von Rost und Stauwand einen Zerkleinerungseffekt für
solche Ansatzbrocken erzielen.

Für einen kontinuierlichen Fluß des an der Oberfläche befindlichen Feinanteils ist es besonders günstig, die Stauwand in
Förderrichtung geneigt auszubilden. Diese Anordnung ist zudem
sehr vorteilhaft für die Anwendung hydraulischer Stellzylinder.

Im Falle besonders breiter Kühler wird die Stauwand zweckmäßig
über die Breite des Kühlgutbettes mehrteilig ausgebildet. Dadurch ist es möglich, über die Kühlerbreite auf unterschiedliche
Kornzusammensetzungen zu reagieren. Dazu sieht man die Teile
der Stauwand vorzugsweise unabhängig voneinander bewegbar vor.

Im folgenden werden Ausführungsbeispiele der Erfindung, die in
der schematischen Zeichnung dargestellt sind, beschrieben. Es
zeigt

Fig. 1    einen Längsschnitt durch einen Rostkühler zur Verwirklichung des erfindungsgemäßen Verfahrens,

Fig. 2    einen Querschnitt durch einen Rostkühler mit einer
Luftkammer unterhalb des Rostes und einer Fördereinrichtung für Feingut.

Ein aus einem Festbett 1 aus Grobgut und einem Wirbelbett 2 aus
Feingut zusammengesetztes Kühlgutbett wird auf einem geneigten
Rost 3 von einer Zulaufstelle 4 aus einem Drehofen zu einer Ablaufstelle 5 gefördert. Unter dem Rost befinden sich Luftkammern 6 und 7. Durch eine Stauwand 8, die von oben her auf das
Kühlgutbett 1, 2 einwirkt, wird das Kühlgutbett angestaut. Mit
der Stauwand 8 wird eine mittlere Betthöhe von 1 m eingestellt.
Der durch den Rost bestimmte Förderanteil des Grobgutes ist mit
9 bezeichnet, während der Förderfluß des Feingutes, der durch
die Stauwand 8 bestimmt wird, mit 10 angegeben ist. Beide Flüsse zusammen ergeben einen Austritts-Förderstrom bzw. eine Gesamtförderrate 11. Diese bestimmt die mittlere Kühlbetthöhe von
1 m. Die für das Bett benötigte Kühlluft wird mittels mehrstufiger Ventilatoren 12, 13 über die Luftkammern 6, 7 mit einer
größenordnungsmäßige
Pressung von etwa 1.000 mm WS eingebracht, wobei der Kühlluftdruck entsprechend der angetroffenen Kornzusammensetzung variiert werden kann. Die zur Ablaufstelle 5 zunehmende Betthöhe
wird im wesentlichen durch die Neigung des Rostes 3 bestimmt.
Sie ist so gewählt, daß beide Luftkammern 6, 7 mit gleichem
Druck beaufschlagt werden, wobei die Luftgeschwindigkeit infolge der zunehmenden Betthöhe und die Lufttemperatur infolge
der fortschreitenden Kühlung gerade so abnehmen, daß die Wirbelschicht dünner wird. Diese Wirbelschicht bewegt sich unter
dem Einfluß des Gefälles und damit der Schwerkraft. Sie kommt
im Bereich der Stauwand 8 zur Ruhe und setzt sich auf dem Festbett 1 ab, um mit diesem entsprechend der Einstellung des Austrittsquerschnittes als Gesamtförderrate 11 ausgetragen zu werden. Die Einstellung des Austrittsquerschnittes bzw. der Stauwand 8 erfolgt über hydraulische Stellzylinder 81. Diese umfassen eine Grenzwertschaltung, um bei Druckerhöhung infolge von
Ansatzbrocken unverzüglich den Austrittsquerschnitt freigeben
zu können.

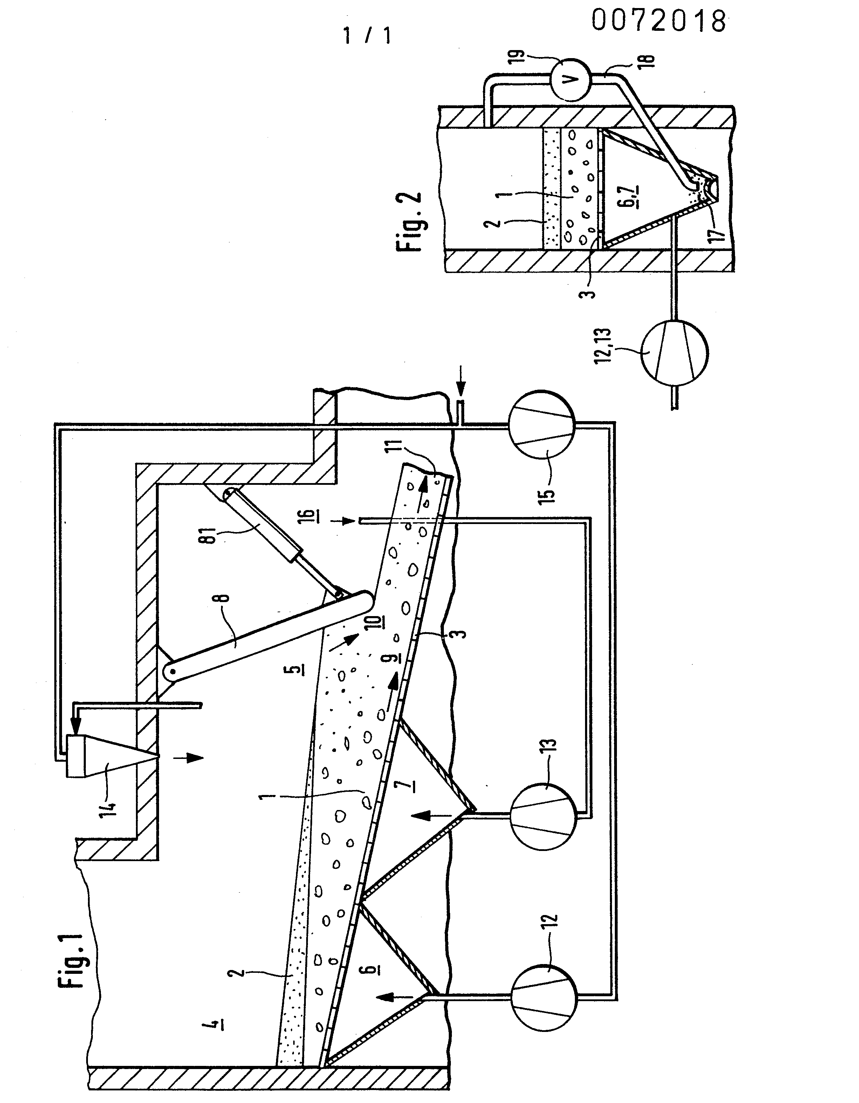

Aus dieser in Fig. 1 gezeigten Anordnung erkennt man, daß das
Grobgut des Festbettes 1, das mit relativ kalter Luft beaufschlagt wird, schnell gekühlt wird und schneller abgefördert
werden kann, während die in dem Grobgut angewärmte Kühlluft
auf das Feingut des Wirbelbettes 2 wirkt, das eine längere
Verweilzeit im Kühler hat.

Die Kühlluftmenge entspricht dem Verbrennungsluftbedarf des
Drehofens und wird laufend von der Brennstoffmenge desselben
als Sollwert vorgegeben. Ihre Verteilung auf die Luftkammern
6, 7 erfolgt so, daß im zeitlichen Mittel gleiche Pressungen
anstehen. Diese werden nach einem vereinfachten Regelschema
durch die Stellung der Stauwand 8 konstant geregelt.

Die Schubzahl des Rostes 3 richtet sich nach der Temperatur des Grobgutes im Bereich der Ablaufstelle 5. Sie wird an den Rostplatten entnommen. - Es ist allerdings auch möglich, sowohl die Stauwand 8 als auch den Rost 3 als Stellglieder von Temperaturregelkreisen arbeiten zu lassen. Die Gesamtförderrate 11 wird dann übergreifend von dem für den Durchsatz einer bestimmen Luftmenge erforderlichen Druck in einer der Luftkammern 6, 7 geregelt werden.

Zulaufschwankungen werden durch die Konstantregelung der Ventilatoren 12, 13 auf die Sollwerte der Luftmengen ausgeglichen. Reicht bei Teillast die Luftmenge nicht für die teilweise Verwirbelung aus, wird über ein Hochtemperaturzyklon 14 und einen Ventilator 15 ein so großer Teil der Luft der ersten Luftkammer 6 im Kreis geführt, daß die Kühlung derjenigen bei Vollast entspricht.

Die Luftkammer 7 endet in einem Abstand von der Stauwand 8, der der Betthöhe entspricht, um den Kühlluftverlust über den Austrittsquerschnitt zu reduzieren. Eine nicht dargestellte dritte Luftkammer ist mit Gegendruck beaufschlagt, um den Kühlluftverlust durch den Rost zu verhindern. Die in einen austrittsseitigen Raum 16 austretende Kühlluft wird von dem Ventilator 13 wieder angesaugt.

Die Stauwand 8 erhält in dem der Wärmestrahlung ausgesetzten Teil einen Vorsatz aus Feuerbeton und im unteren Teil Schleißplatten aus dem gleichen Stahlguß wie die Rostplatten.

In dem Beispiel der Fig. 2 ist für den Rostdurchfall in die Luftkammern 6, 7 je eine Sammelstelle 17 vorgesehen. Der Rostdurchfall wird mit der Pressung der Ventilatoren 12, 13 in Leitungen 18 pneumatisch auf das Rostbett zurückbefördert. Ein Ventil 19 kann dabei je nach Bedarf drosseln oder intermittierend arbeiten.

0072018

Karl von Wedel, Amselstraße 5, 3057 Neustadt 1

Verfahren zum Kühlen von Kühlgutbetten auf Rostkühlern und
Stauvorrichtung zur Durchführung des Verfahrens

P a t e n t a n s p r ü c h e :

1. Verfahren zum Kühlen von Kühlgutbetten aus ungleichförmigen
Korngemischen von gebranntem Schüttgut wie Zementklinker
auf Rostkühlern, d a d u r c h  g e k e n n z e i c h -
n e t ,  daß eine obere Schicht des Kühlguts an der kalten Ablaufseite (5) des Rostkühlers angestaut wird.

2. Verfahren nach Anspruch 1, d a d u r c h  g e k e n n -
z e i c h n e t ,  daß die angestaute obere Kühlgutschicht durch entsprechend hoch gewählte Kühlmediumsgescnwindigkeit oberhalb einer sich absetzenden Festbettschicht groben Korns zumindest teilweise ein Wirbelbett
aus Feingut bildet.

3. Verfahren nach Anspruch 1 oder 2, d a d u r c h
g e k e n n z e i c h n e t ,  daß die mittlere Betthöhe von Rostkühlern wesentlich erhöht wird.

4. Verfahren nach Anspruch 2 oder 3, d a d u r c h
g e k e n n z e i c h n e t ,  daß das Kühlgut, d.h.
das Festbett (1) und das Wirbelbett (2) zusammengenommen, von der heißen Zulaufseite (4) zur kalten Ablaufseite (5) hin in seiner Höhe zunimmt, wobei das Wirbelbett (2) in gleicher Richtung in seiner Höhe abnimmt.

5. Verfahren nach Anspruch 4, d a d u r c h  g e k e n n -
z e i c h n e t ,  daß das Wirbelbett (2) unter dem Einfluß eines Gefälles und der Schwerkraft gefördert wird.

0072018

6. Verfahren nach Anspruch 4 oder 5, d a d u r c h
g e k e n n z e i c h n e t , daß von dem Festbett (1)
und von dem Wirbelbett (2) getrennte Temperaturwerte gemessen und nach diesen Werten die Fördergeschwindigkeiten des Festbettes (1) und des Wirbelbettes (2) eingestellt oder geregelt werden.

7. Verfahren nach einem der Ansprüche 1 bis 6,
d a d u r c h   g e k e n n z e i c h n e t ,   daß durch
den Rost fallendes Material zusammen mit dem Kühlmedium
dem Kühlgut wieder zugeführt wird.

8. Stauvorrichtung zur Durchführung des Verfahrens nach
einem der Ansprüche 1 bis 7, d a d u r c h   g e -
k e n n z e i c h n e t ,   daß oberhalb des kalten Ablaufes (5) des Kühlgutbettes (1, 2) zwischen den Seitenwänden des Kühlers eine Stauwand (8) angeordnet ist, die
zum Rost (3) eine Öffnung für den Durchtritt des Kühlgutes
frei läßt.

9. Stauvorrichtung nach Anspruch 8, d a d u r c h
g e k e n n z e i c h n e t ,   daß der Auslaufquerschnitt
für das Kühlgut zwischen dem Rost (3) und der Stauwand (8)
verstellbar ist.

10. Stauvorrichtung nach Anspruch 9, d a d u r c h
g e k e n n z e i c h n e t ,   daß zur Verstellung des
Auslaufquerschnittes eine Hydraulik umfassend einen oder
mehrere hydraulische Stellzylinder (81) vorgesehen ist.

11. Stauvorrichtung nach Anspruch 10, d a d u r c h
g e k e n n z e i c h n e t ,   daß die Hydraulik (81)
eine oberhalb des normalen Anstelldruckes ansprechende
Grenzdruckschaltung für ein kurzzeitiges Anheben der
Stauwand (8) und danach selbsttätiges Absenken derselben
aufweist.

12. Stauvorrichtung nach einem der Ansprüche 8 bis 11, d a d u r c h   g e k e n n z e i c h n e t ,   daß die Stauwand (8) in Förderrichtung geneigt ist.

13. Stauvorrichtung nach einem der Ansprüche 8 bis 12, d a d u r c h   g e k e n n z e i c h n e t ,   daß die Stauwand (8) über die Breite des Kühlgutbettes (1, 2) mehrteilig ausgebildet ist.

14. Stauvorrichtung nach Anspruch 13,   d a d u r c h g e k e n n z e i c h n e t ,   daß die Teile der Stauwand (8) unabhängig voneinander bewegbar sind.

Fig.1

Fig.2

0072018

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 831 291 (K.H. KAYATZ)<br><br>* Spalte 1, Zeilen 9-13, Zeile 67 - Spalte 2, Zeile 2; Spalte 4, Zeilen 21-34, 47-50; Figur 1 * | 1,2,4, 8,12 | F 27 D 15/02<br>C 04 B 7/50 |
| A | DE-A-1 408 996 (RHEINISCHE KALKSTEINWERKE) | | |
| A | DE-A-1 551 417 (KLÖCKNER-HUMBOLDT) | | |

RECHERCHIERTE SACHGEBIETE (Int. Cl. 3)

C 04 B 7/00
F 27 D 15/00

Der vorliegende Recherchenbericht wurde für alle Patentansprüche erstellt.

| Recherchenort | Abschlußdatum der Recherche | Prüfer |
|---|---|---|
| DEN HAAG | 12-11-1982 | DAELEMAN P.C.A. |